# DEMANDE DE BREVET EUROPEEN

(11) **EP 1 001 548 A1**
(43) Date de publication de la demande: **17.05.2000**
(21) Numéro de dépôt: 99402813.2
(22) Date de dépôt: 12.11.1999
(51) Int. Cl.: H04B 1/40

(54) **Procédé de réglage d'un émetteur récepteur multibande de téléphonie mobile et téléphone mobile ainsi obtenu**

(30) Priorité: 13.11.1998 FR 9814294
(71) Demandeur: SAGEM S.A., 75116 Paris (FR)
(72) Inventeur: Recouly, Marc M., 95000 Cergy (FR)
(74) Mandataire: Schmit, Christian Norbert Marie

(57) **Abrégé**

Pour réaliser un émetteur-récepteur multibande sans avoir à multiplier le nombre des oscillateurs utilisés pour la modulation et la démodulation de signaux situés dans des bandes de fréquence très différentes les unes des autres, on utilise un couple (13, 14) de diviseurs de fréquence, programmables, installés dans un circuit d'émission comportant un oscillateur (3, 30) à fréquence d'émission, un oscillateur unique (4) à fréquence de transition et un oscillateur (5) à fréquence intermédiaire. Pour passer (11) d'une utilisation dans une bande à une utilisation dans une autre bande, il suffit de modifier, à l'aide d'un microprocesseur (15) les coefficients de division des diviseurs programmables en utilisant des facultés infradyne et supradyne.

## Description

La présente invention a pour objet un procédé de réglage des fréquences de fonctionnement d'un téléphone de téléphonie mobile multibande et un téléphone ainsi obtenu. Elle est principalement utilisable, dans le domaine de la téléphonie mobile, quand il s'agit de passer d'une bande de fréquence donnée à une autre bande de fréquence donnée, la plupart du temps selon une autre norme pour le codage de messages transmis. Le but de l'invention est de réduire le coût de fabrication d'un tel téléphone multibande.

Dans le domaine des radiocommunications, on connaît la norme dite GSM dans laquelle des messages sont diffusées par des stations de base et ou des téléphones mobiles dans la gamme des 900MHz. On connaît par ailleurs la norme DCS dans laquelle la gamme de fréquence est de l'ordre de 1800 MHz. Il existe par ailleurs la gamme PCS dans laquelle cette bande de fréquence est de 1900 MHz. Il existe encore la norme UMTS dans laquelle la bande de fréquence est de 2200 MHz. L'existence de toutes ces bandes ou d'autres à venir est bien entendue favorable à la multiplicité des réseaux de communication, et donc à une possibilité en fréquence plus grande, pour des utilisateurs, d'être connectés les uns avec les autres.

En plus des bandes de fréquence différentes, il existe des répartitions de canaux de transmission de type temporel, fréquentiel ou par codage, de façon à pouvoir acheminer à partir d'une même station de base, et dans un même domaine géographique, des communications diverses et simultanées. Les transmissions sont ainsi de type TDMA, FDMA ou CDMA ou encore mixte. Les significations de ces appellations sont Time Division Multiple Acces, ou Frequency Division Multiple Access ou Coded Division Multiple Access dont les traductions sont Accès Multiple à Répartition dans le Temps, en Fréquence, ou de Codage, AMRT, AMRF, et AMRC. L'invention s applique quel que soit le mode de transmission de ce point de vue.

Les appareils évoqués sont évidemment des émetteurs-récepteurs et doivent comporter une chaîne d'émission et une chaîne de réception. Les stations de base comportent souvent en poste fixe des mêmes blocs et composants que des téléphones mobiles puisque ces derniers sont fabriqués en grande série, et sont donc bon marché. Pour cette raison l'invention concerne les téléphones de téléphonie mobile, que ces téléphones soient en eux-mêmes mobiles ou non.

Dans de tels téléphones, à partir d'une antenne commune, un dispositif permet de séparer une voie de réception d'une voie d'émission. Dans la voie d'émission, compte tenu d'une agilité en fréquence généralement mise en oeuvre dans les procédés de téléphonie mobile, il est courant de réaliser un émetteur avec trois oscillateurs. Un premier oscillateur, de sortie, produit un signal à une fréquence d'émission. Ce signal d'émission est par ailleurs mélangé dans un mélangeur avec un signal produit par un oscillateur produisant un signal à une fréquence de transition. Le mélangeur produit un signal de différence ayant une fréquence qui correspond à la différence de la fréquence d'émission et de la fréquence de transition. Ce signal de différence est alors comparé à un signal produit par un troisième oscillateur à fréquence intermédiaire. Pour fixer les idées, la fréquence intermédiaire produite par le troisième oscillateur peut être de l'ordre de 100 MHz et l'écart entre la fréquence d'émission et la fréquence de transition est du même ordre. Il suffit ensuite de jouer sur la fréquence de transition pour provoquer, d'une trame à l'autre ou périodiquement, des changements de la fréquence d'émission et respecter l'agilité requise.

Les problèmes présentés par ce type de fonctionnement sont multiples. Un d'eux est lié à la grande différence de fréquence qui existe entre les différentes normes. En effet, de la norme GSM à la norme DCS, la fréquence est tout simplement doublée. En outre les excursions en fréquence pour réaliser l'agilité en fréquence, elles-mêmes normalisées, sont assez conséquentes. Ainsi pour la norme GSM, la dynamique de fréquence (en émission ou en réception) est de 35 MHz. Pour les normes DCS et PCS elle est de 75 MHz et de 60 MHz respectivement.

Pour un appareil monobande, par ailleurs, un même oscillateur à fréquence de transition sert dans la voie de réception. Dans ce cas, le signal qu'il produit est mélangé dans un mélangeur de réception avec le signal reçu. Le mélangeur de réception produit alors un signal dont la fréquence est sensiblement de l'ordre de la fréquence de l'oscillateur à fréquence intermédiaire de manière à permettre une démodulation immédiate en bande de base. On limite ainsi le nombre des mélangeurs et le nombre des démodulations.

A titre indicatif, une séparation entre la bande de fréquence allouée à l'émission et la bande de fréquence allouée à la réception est de 10 MHz dans la norme GSM, et de 20 MHz dans la norme DCS et dans la norme PCS. Ceci conduit en définitive les oscillateurs à fréquence de transition à devoir être capables d'une dynamique respectivement de 80 MHz (35 plus 10 plus 35), de 170 MHz (75 plus 20 plus 75) et 140 MHz (60 plus 20 plus 60) pour ces trois normes respectivement. Compte tenu de ces excursions très significatives (qui sont de l'ordre de 10% de la fréquence nominale de l'oscillateur), il n'apparaît pas possible dans l'état actuel de la technologie de fabrication de ces oscillateurs de leur faire couvrir deux bandes, même les deux plus proches (DCS et PCS). Leur faire couvrir une bande unique est déjà un problème.

En effet, pour un service de bonne qualité avec un téléphone mobile, la pureté spectrale de ces oscillateurs doit être meilleure que -87dBc/Hz à 10 KHz de la porteuse, meilleure que -107dBc/Hz à 100 KHz de la porteuse et meilleure que -140dBc/Hz à 3 MHz de la porteuse. La plage de réglage de fréquence de l'oscillateur à la fréquence de transition est théoriquement comprise entre 1 et 2 GHz. Dans les faits, la complexité de ces oscillateurs, pour les applications GSM, DCS et PCS conduit à les ranger en trois catégories.

Dans une première catégorie, on recense les oscillateurs commandés en tension et dits non-ajustés. Pour ceux-ci, seule la tension de commande permet de rattraper des dispersions de caractéristiques de leurs composants, et de travailler sur une certaine bande de fréquence autour d'une fréquence de base imposée. Dans les téléphones mobiles, aujourd'hui, la tension d'alimentation est de l'ordre de trois volts. En effet, ils utilisent trois éléments de batterie, soit 3,6 volts en nominal. Un régulateur ramène cette tension à trois volts disponibles. La tension de commande utile est alors comprise entre 0,5 et 2,5 volts. Compte tenu du rattrapage de la dispersion des caractéristiques par la tension, cette plage de tension ne peut être totalement exploitée, et en pratique la bande de fréquence autour d'une fréquence de base imposée ne peut être que de l'ordre de 40 MHz. Ces oscillateurs de première catégorie sont aussi les moins chers.

Dans une deuxième catégorie, on recense les oscillateurs dits ajustés. Pour ceux-ci, la dispersion des caractéristiques due à leurs composants est rattrapée par des réglages préalables. La tension de commande sert toutefois encore à rattraper des dispersions en température. Dans ce cas, pour une même gamme de tension de commande de 2 volts, ou peut disposer autour d'une fréquence de base imposée d'une plage de fonctionnement de 100 MHz.

Dans une troisième catégorie, on augmente encore la bande utile autour d'une fréquence de base imposée de deux manières. Soit on réalise une commutation d'un résonateur de l'oscillateur, soit on augmente la gamme de la tension de commande. La commutation d'un élément dans l'oscillateur permet d'avoir une deuxième bande. Cet élément commuté n'étant pas ajusté, il est difficile d'atteindre une grande précision. En outre un tel élément ajoute une dérive en température, s'il a une grande importance dans la fréquence de l'oscillation. Pour cette raison, le saut de fréquence est limité. Les deux bandes doivent rester dans une bande limitée. Pour une même gamme de tension de commande de deux volts, on obtient ainsi une plage de fonctionnement de 220 MHz. On obtient des résultats comparables en utilisant un multiplicateur de tension. L'oscillateur n'en devient pas plus complexe, mais le circuit de commande lui l'est. Les oscillateurs de cette troisième catégorie sont évidemment bien plus chers que ceux de la deuxième catégorie, qui eux-mêmes sont plus chers que ceux de la première catégorie.

Il existe une quatrième catégorie qui comporte deux oscillateurs dans un même boîtier. Elle est assimilable en coût à deux oscillateurs de la deuxième catégorie.

Compte tenu de ces contraintes de dynamique en fréquence limitée, la complexité croissante de ces oscillateurs a un impact direct sur leur coût. On peut ainsi schématiquement leur attribuer des coûts de valeur 1, 2 et 3 selon leur catégorie. Un autre critère pour apprécier le coût d'un étage émetteur récepteur serait d'additionner toutes les bandes de fréquence de tous les oscillateurs impliqués.

Un téléphone de téléphonie mobile multibande devrait comporter des systèmes d'émission-reception en autant d'exemplaires qu'on voudrait qu'il soit capable de couvrir de bandes différentes. Le coût d'un tel téléphone de téléphonie mobile serait alors proportionnel directement au nombre de bandes desservies. Dans le cas général, son coût serait multiplié par quatre, notamment parce qu'on multiplierait les oscillateurs. Ce n'est pas acceptable.

Selon l'invention ce problème va être résolu à partir d'un nombre limité d'oscillateurs. Dans une version complète, et dans un mode d'utilisation, on ne disposera au total que de cinq voire quatre oscillateurs : c'est à dire même moins que ce qui serait nécessaire pour autoriser des fonctionnements dans deux bandes distinctes. L'objet premier de l'invention est donc de diminuer le nombre d'oscillateurs commandés en tension utilisés, et d'en diminuer le coût.

Un autre objet de l'invention est, lorsqu'on utilise des oscillateurs même avec une plage de réglage faible, de ne pas avoir à commuter l'oscillateur à la fréquence de transition entre l'émission et la réception, alors même que les plages de réglage de ces oscillateurs sont faibles devant la dynamique désirée de variation de fréquence pour une norme quelconque donnée. En effet, on veut pouvoir exploiter toutes les possibilités des normes qui prévoient, lorsqu'on veut transmettre des grandes quantités d'information, d'assurer la transmission dans des fenêtres temporelles successives. Dans ce cas, les passages d'émission à réception doivent s'exécuter pendant des durées plus courtes. La commutation d'oscillateur est rédhibitoire dans ce cas : le temps de commutation d'un oscillateur à grande dynamique est trop long.

Aussi dans l'invention, on s'est arrangé pour que la dynamique de commande des oscillateurs à fréquence de transition puisse être faible et ne pas avoir à les commuter. De cette façon les oscillateurs sont moins chers, tout en satisfaisant aux besoins.

Un des moyens de l'invention consiste à disposer des diviseurs de fréquence en sortie des oscillateurs, notamment en sortie de l'oscillateur à fréquence intermédiaire et également entre un premier mélangeur et un comparateur. On joue ensuite sur les coefficients de division de ces diviseurs de façon à produire par composition algébrique (par addition ou soustraction) des combinaisons fréquentielles permettant l'exploration de toutes les largeurs de bande allouées, en émission et en réception, en limitant par ailleurs la dynamique de réglage d'un oscillateur réglable, essentiellement l'oscillateur à fréquence de transition.

La solution de l'invention est ensuite remarquable en ce sens qu'on ne commute pas les oscillateurs utilisés quand on passe d'émission à réception et réciproquement. Comme une telle commutation n'est pas présente, le temps de montée pour conduire à une utilisation donnée d'un oscillateur, due à une agilité en fréquence, conduit à pouvoir utiliser des fenêtres temporelles successives, dans une même trame TDMA, ce qui est favorable à l'augmentation des débits d'information à transmettre avec un téléphone de téléphonie mobile.

En effet, un synthétiseur radiofréquence, l'oscillateur à fréquence de transition, à cause du principe de la réception hétérodyne (filtrage de sélectivité sur une fréquence intermédiaire unique) doit suivre des pas de fréquence du signal d'entrée, c'est à dire des canaux étagés tous les 200 KHz. Ce n'est pas le cas de l'oscillateur à fréquence intermédiaire qui, notamment en GSM, DCS et PCS, peut être synthétisé à partir d'une fréquence d'horloge recommandée. La fréquence recommandée est de 13 MHz, et conduit à un pas de 1 MHz, obtenu par division par 13.

Du fait de son pas de 1 MHz, et donc de sa fréquence de comparaison de 1 MHz, l'oscillateur à fréquence intermédiaire est plus rapide (dans un rapport de la racine carrée des rapports des fréquences de comparaison : ici √5) que l'oscillateur à fréquence de transition, et ce pour une même boucle, et pour des puretés spectrales équivalentes.

Cette rapidité permet de couper plus longtemps les oscillateurs entre chaque fenêtre temporelle, d'où une consommation moindre. Elle permet aussi d'utiliser plusieurs fenêtres dans une même trame pour la transmission de donnée, conformément aux réquisitions de la norme GSM 05 02.

Dans l'invention, on détermine la gamme de fonctionnement de l'oscillateur à fréquence de transition en retenant comme critère la présence des diviseurs, la renonciation à la commutation de l'oscillateur à la fréquence de transition, et une composition infradyne-supradyne tant en émission-réception qu'en bande différente GSM, DCS, et PCS. On aboutit alors à des solutions peu onéreuses, l'oscillateur à fréquence de transition, unique, étant de troisième catégorie, alors que l'oscillateur à fréquence intermédiaire est de première catégorie. Ou bien ces deux oscillateurs sont au plus de deuxième catégorie. Il en résulte une réduction significative du prix de l'émetteur récepteur et donc du téléphone multibande.

L'invention a donc pour objet un procédé de réglage d'un émetteur récepteur multibande de téléphonie comportant une antenne de rayonnement, une voie d'émission et une voie de réception reliées à cet aérien, un premier, un deuxième et un troisième oscillateurs commandés en tension et délivrant respectivement un signal à une fréquence d'émission, un signal à une fréquence de transition, et un signal à une fréquence intermédiaire, le signal à la fréquence d'émission étant transmis par le premier oscillateur à l'antenne, un premier mélangeur connecté en entrée aux sorties des premier et deuxième oscillateurs, et recevant de ce premier oscillateur le signal à la fréquence d'émission et de ce deuxième oscillateur le signal à la fréquence de transition, un comparateur connecté en entrée à la sortie du premier mélangeur et à la sortie du troisième oscillateur, et délivrant en sortie un signal de commande du premier oscillateur, et entre le premier mélangeur et le comparateur et entre le troisième oscillateur et le comparateur respectivement un premier et un deuxième diviseur de fréquence,
caractérisé en ce qu'il comporte les étapes suivantes
- on établit un système d'inéquations qui prend en compte une dynamique limitée en fréquence d'un unique oscillateur à fréquence de transition pour que cet oscillateur couvre toutes les bandes désirées en émission et en réception,
- ce système d'inéquations possédant comme inconnues des plages de fréquence de cet oscillateur à fréquence de transition et de cet oscillateur à fréquence intermédiaire,
- on résout le système d'inéquations en choisissant des valeurs de division des diviseurs de fréquence inférieures à un nombre prédéterminé,
- on règle l'émetteur récepteur avec des solutions des inéquations et en programmant les diviseurs,
- et on fait fonctionner le premier mélangeur en infradyne pour une bande de fréquence et en supradyne pour une autre.

L'invention sera mieux comprise à la lecture de la description qui suit et à l'examen de la figure qui l'accompagne. Celles-ci ne sont présentées qu'à titre indicatif et nullement limitatif de l'invention. La figure montre :
- Figures 1 et 2 : des représentations schématiques de circuits d'émission et de réception d'un téléphone de téléphonie mobile selon l'invention, respectivement tribande et bibande ;
- Figure 3 : une représentation d'occupation en fréquence des différentes bandes de fréquence à combiner pour les couvrir avec un même oscillateur.

La description comporte également un TABLEAU 1 et un TABLEAU 2 qui sont des représentations tabulées de différentes possibilités de réglage des oscillateurs de l'invention. Les TABLEAU 1 et TABLEAU 2 sont incorporés dans la présente description dont il font partie. Les TABLEAU 1 et TABLEAU 2 font partie intégrante de la description, et à ce titre n'ont pas besoin d'être plus particulièrement décrits.

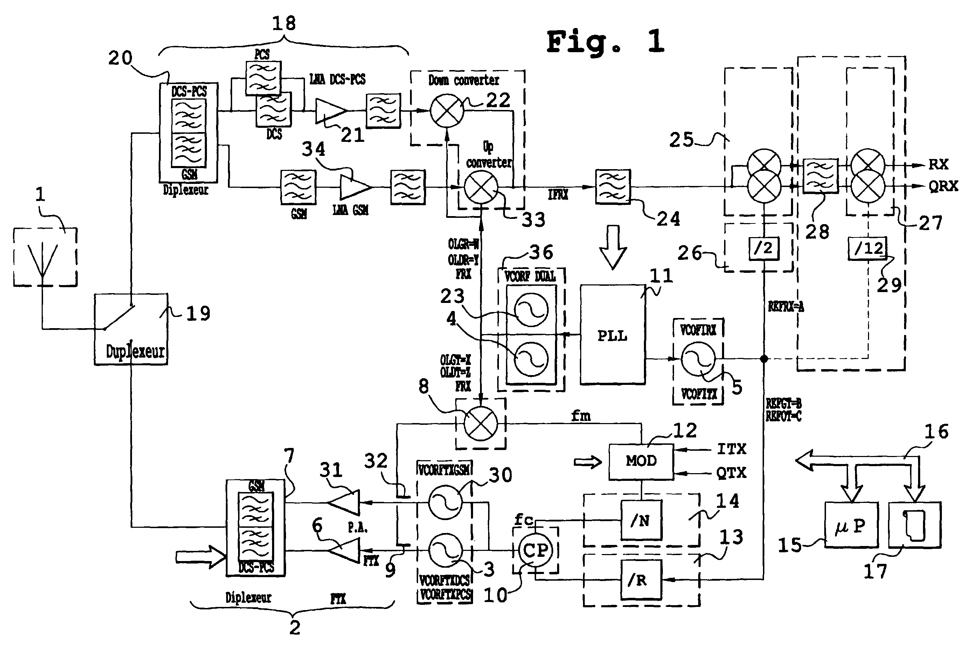

Les figures 1 et 2 montrent un émetteur-récepteur utilisable dans un téléphone de téléphonie mobile selon l'invention. Cet émetteur récepteur est respectivement tribande et bibande dans ces figures. Ce téléphone peut être placé à titre d'organe émetteur-récepteur dans une station de base ou un téléphone mobile puisqu'en définitive il comporte tous les organes utiles pour l'émission et la réception. Ceci a pour résultat de considérablement baisser le coût des stations de base également. Ce téléphone de téléphonie mobile comporte essentiellement une antenne 1 et une voie d'émission 2. Il comporte également un premier, un deuxième et un troisième oscillateur commandé en tension respectivement 3, 4 et 5. Ces oscillateurs 3, 4 et 5 portent des appellations VCO (pour oscillateur commandé en tension), TX, RF ou FI relatives à la nature de la fréquence du signal qu'ils produisent : fréquence d'émission, de transition (RF) ou intermédiaire. Ils comportent également une appellation DCS (ou GSM ou autre) selon la norme à laquelle, dans un exemple, on les destine. L'oscillateur 4 comporte également une indication TX pour l'émission (et RX pour la réception) selon l'usage qui en est fait car dans l'invention, cet oscillateur 4 est de préférence unique et sert pour les deux fonctions.

En émission, loscillateur 3 produit le signal à la fréquence d'émission qui est transmis par la voie 2 à l'antenne 1. Dans ce but la voie 2 comporte un amplificateur de puissance 6 et un circuit diplexeur 7. Un tel circuit diplexeur (par analogie avec les duplexeurs) est chargé de séparer par filtrage des voies d'émission selon que le signal sera dans une bande (GSM, DCS, PCS) ou dans une autre.

Ce téléphone comporte encore un premier mélangeur 8 à deux entrées. Sur une première entrée le mélangeur 8 reçoit un signal provenant de l'oscillateur 3 et prélevé par un capteur 9. Sur une deuxième entrée il reçoit le signal de sortie de l'oscillateur 4 à la fréquence de transition. On appelle FTX la fréquence du signal produit par l'oscillateur 3 à destination du mélangeur 8 et RFTX la fréquence du signal produit par l'oscillateur 4. Le mélangeur délivre un signal avec une fréquence fm.

Le signal délivré par le troisième oscillateur, ainsi que le signal à la fréquence fm délivré par le premier modulateur 8 sont conduits sur les deux entrées d'un comparateur 9. Le comparateur 9 délivre un signal de commande qui commande le fonctionnement de l'oscillateur 3. En ce qui concerne les oscillateurs 4 et 5 ils sont par ailleurs commandés par un circuit 11 de régulation et de programmation dont on verra le fonctionnement plus loin. On a par ailleurs représenté, en cascade entre le mélangeur 8 et le comparateur 10, un modulateur 12 recevant des signaux I et Q d'émission (ITX et QTX). Le fait de placer le modulateur 12 à cet endroit n'est pas une nécessité. Le modulateur 12 pourrait être placé en tout autre endroit.

Le téléphone de l'invention comporte par ailleurs d'autres organes (notamment ceux utiles à la production des signaux ITX et QTX) non décrits car communs à l'invention et aux téléphones connus.

Une caractéristique essentielle de l'invention se situe dans le fait que l'oscillateur 5 est relié au comparateur 6 par l'intermédiaire d'un diviseur 13, par R, alors que le mélangeur 8 est relié au comparateur 10, en cascade ici avec le modulateur 12, par un diviseur 14 par N. Les diviseurs 13 et 14 permettent de diviser la fréquence des signaux VCOFITX et fm délivrés respectivement par l'oscillateur 5 et le mélangeur 8. Le comparateur 10 doit alors comparer des signaux dont la fréquence est plus faible. La fréquence des signaux ainsi introduits sur les deux entrées du comparateur 10 est bien inférieure à celle des signaux VCOFITX et fm. Par ailleurs, le modulateur 12 pourrait être placé dans la liaison entre l'oscillateur 5 et le comparateur 10 si N = R.

On montrera à l'aide du TABLEAU 1, parmi toutes les combinaisons possibles de N et R celles qui peuvent conduire, selon l'invention, d'une part à une réduction du nombre d'oscillateurs et d'autre part à une limitation de la dynamique de fréquence de ces oscillateurs commandés en tension. A cette fin, le téléphone de l'invention comporte par ailleurs un microprocesseur 15 relié par un bus 16 à une mémoire 17 de programme et de travail. Le bus 16 produit par ailleurs des signaux de commande permettant de modifier les valeurs R et N à la demande, de commander le circuit de réglage 11, de commuter le diplexeur 7 ainsi que de commander d'une manière générale tous les circuits utiles. Selon une caractéristique de perfectionnement de l'invention, les nombres R et N pourront être modifiés : les diviseurs 13 et 14 seront programmables par le microprocesseur 15. De ce fait, selon les bandes multiples auxquelles on veut que le téléphone de téléphonie mobile de l'invention puisse s'adapter, on pourra choisir les oscillateurs 3, 4 et 5 avec des gammes de fréquences différentes, et commandées différemment, afin de limiter le nombre total des oscillateurs.

Le téléphone de téléphonie mobile de l'invention comporte par ailleurs une voie de réception 18. La voie 18 est reliée à l'antenne 1 par l'intermédiaire d'un dispositif séparateur émission réception 19, dit duplexeur, qui, alternativement, relie l'antenne 1 à la voie 2 ou à la voie 18. La voie 18 comporte comme la voie 2 un diplexeur 20. Elle comporte de plus un amplificateur faible bruit 21 en cascade avec le diplexeur 20. La voie 18 de réception est reliée à une première entrée d'un deuxième mélangeur 22. Le mélangeur 22 est connecté par une autre entrée à une sortie du deuxième oscillateur 4. Le deuxième oscillateur 4 délivre dans ce cas un signal à une fréquence RFRX de transition, c'est à dire à une fréquence relativement proche de la fréquence du signal qui passe par l'antenne 1. En ce qui concerne l'agilité en fréquence, elle sera réalisée par la programmation de l'oscillateur 4. Comme on le verra plus loin, le deuxième oscillateur 4 est soit attribué à l'émission et à la réception comme montré, soit attribué à une bande ou à une autre bande. La fréquence du signal reçu dans la voie 18 est ainsi abaissée par mélange dans le mélangeur 22. Le signal résultant est injecté, au travers d'un filtre 24, dans un troisième mélangeur 25 par une première entrée. Le troisième mélangeur 25 reçoit par une autre entrée le signal du troisième oscillateur 5 par l'intermédiaire d'un troisième diviseur 26. Dans un exemple préféré le troisième diviseur 26 est uniquement un diviseur par deux.

Sur la figure 2, on a retenu les mêmes éléments que sur la figure 1. Toutefois, au lieu d'y avoir deux diplexeurs et un commutateur 19, on a un diplexeur et deux commutateurs. Les organes 7 et 20 sont alors des filtres séparés.

Avec l'organisation ainsi retenue, on peut écrire que
FTX est la fréquence du signal émis;
FRX est la fréquence du signal reçu;
FITX est la fréquence du signal de l'oscillateur 5 en émission;
FIRX est la fréquence du signal de l'oscillateur 5 en réception;
RFTX est la fréquence de l'oscillateur de transition en émission;
RFRX est la fréquence de l'oscillateur de transition en réception;
fm est la fréquence du signal au sortir du mélangeur 8;
fc est la fréquence de comparaison résultant des divisions par N et R.
Dans ce cas :
fc = fm / N et fc = FITX / R
RFTX = N x fc + / - FTX
FTX + / - RFTX = fm.

La technologie des diviseurs et des mélangeurs peut être classique. Pour les diviseurs, étant donné que les signaux sont modulés en fréquence, qu'ils sont à amplitude constante, il suffit de les faire passer à travers un jeu de bascule D pour diviser leur fréquence par deux, par trois, par quatre etc. Pour rétablir un signal sinusoïdal, il suffit de filtrer ensuite par un filtre passe bas à bande large pour retrouver des signaux exploitables. Dans la pratique, à la sortie des diviseurs 13 et 14 il n'y aura même pas un tel filtre, seul le comparateur 10 pourra posséder un filtre passe bas à basse fréquence, par exemple entre 10 et 100 KHz, avant d'attaquer l'oscillateur 3.

En ce qui concerne les mélangeurs ceux-ci sont en général de type déséquilibré. De préférence on exploite le signal le plus favorisé de ces deux signaux. Pour celle raison on parle de mélangeur infradyne et de mélangeur supradyne. Pour passer de l'un à l'autre il suffit d'inverser les entrées. Dans un exemple, le mélangeur 22 sera un mélangeur infradyne. Il fournit un signal de mélange dont la fréquence est inférieure à l'un quelconque des signaux mélangés.

Dans une variante, le signal démodulé en bande de base n'est pas directement disponible à la sortie du troisième mélangeur 25. Dans ce cas on peut utiliser un quatrième mélangeur 27 monté en cascade, après un filtre 28, avec le troisième mélangeur 25. Le quatrième mélangeur 27 reçoit sur une autre entrée le signal produit par l'oscillateur 5 à fréquence intermédiaire, divisé par un quatrième diviseur 29. Dans un exemple préféré le coefficient de division du quatrième diviseur 29 vaut 12.

Les mélangeurs 25 et 27 sont des mélangeurs en quadrature de même que le modulateur 12 est un modulateur en quadrature. Ils produisent donc, selon le cas, des signaux I et Q en réception (IRX et QRX). Ces signaux sont ensuite traités dans le téléphone de téléphonie mobile par des circuits non représentés. Ces circuits non représentés étaient par ailleurs ceux qui produisaient les signaux ITX et QTX utilisables pour l'émission.

Dans une variante simple, il n'y aura qu'un seul oscillateur 3 comme il n'y aura qu'un seul mélangeur 22 pour effectuer l'émission et la réception dans deux bandes. Dans un cas préféré cependant, le premier oscillateur 3 sera connecté en parallèle d'un quatrième oscillateur 30 entre le comparateur 10 et le diplexeur 7. Le quatrième oscillateur 30 sera accordé sur une autre gamme de fréquence que celle du premier oscillateur 3. Le quatrième oscillateur 30 sera lui également relié à un amplificateur de puissance 31 dont la sortie est connectée à une des deux entrées du diplexeur 7. Le cas échéant un capteur 32 prélève le signal de l'oscillateur 30 pour l'appliquer aussi à la première entrée du mélangeur 8. Dans la voie de réception, le diplexeur 20 possède une deuxième sortie permettant d'appliquer les signaux reçus à un cinquième mélangeur 33, supradyne, monté en parallèle avec le deuxième mélangeur 22 dans la voie de réception 18. Dans ce cas la voie en parallèle comportera aussi un amplificateur à faible bruit 34. Des filtres sont par ailleurs interposés dans chacune des voies en parallèles de la voie de récepteur 18.

On va maintenant expliquer comment sont obtenues les valeurs de fréquence retenues pour l'oscillateur 4 à fréquence de transition et pour l'oscillateur 5 à fréquence intermédiaire. On va dans un premier temps désigner par des noms de variable les valeurs de fréquences apparaissant aux différents noeuds du circuit. Dans un deuxième temps on établira les inéquations qui résultent des contraintes rappelées ci-dessus de plage limitée d'un unique oscillateur à fréquence de transition, de non commutation de cet oscillateur, et de combinaison supradyne-infradyne. Dans un troisième temps on montrera comment résoudre le système d'inéquations écrit.

Soient pour les variables :
- IFRX la fréquence du signal disponible en sortie du mélangeur 22,
- FGR la fréquence du signal radioélectrique reçu en GSM,
- FDR la fréquence du signal radioélectrique reçu en DCS,
- FGT la fréquence du signal radioélectrique émis en GSM,
- FDT la fréquence du signal radioélectrique émis en DCS,
- OLGR=W la fréquence de l'oscillateur à fréquence de transition en réception an GSM,
- OLDR=Y la fréquence de l'oscillateur à fréquence de transition en réception an DCS,
- OLGT=X la fréquence de l'oscillateur à fréquence de transition an émission en GSM,
- OLDT=Z la fréquence de l'oscillateur à fréquence de transition en émission an DCS,
- REFRX=A la fréquence de l'oscillateur à fréquence intermédiaire en réception,
- REFGT=B la fréquence de l'oscillateur à fréquence intermédiaire an émission an GSM,
- REFDT=C la fréquence de l'oscillateur à fréquence intermédiaire en émission en DCS.

Cas signaux sont par ailleurs indiqués sur les figures 1 et 2, sur les connexions sur lesquels ils sont disponibles.

En réception, on peut écrire les deux équations suivantes :
- en GSM: IFRX = REFRX / 2 = OLGR -FGR
- en DCS: IFRX = REFRX / 2 = -OLDR+FDR

La division par 2 est due à la présence du diviseur 26. L'interversion des signes est due au fonctionnement supradyne-infradyne.

En émission, on peut écrire les deux équations suivantes :
- en GSM: FGT = OLGT - (N/R) REFGT
- an DCS: FDT = OLDT + (N'/R') REFDT

Dans l'invention, en effet, dans les deux cas ci-dessus, l'inversion de signe est du au caractère supradyne et infradyne des mélanges. Ce qui est remarquable dans l'invention est alors qu'une telle inversion est aussi pratiquée, an émission, pour passer de la bande GSM à la bande DCS ou PCS ou autre.

De ces équations il ressort les fréquences suivantes de l'oscillateur à fréquence de transition :
OLGR = FDR + REFRX / 2 OLDR = FDR - REFRX / 2
OLGT = FGT + (N/R)REFGT OLDT = FDT - (N'/R') REFDT

Avec les variables A, B, C, W, X, Y, et Z, et en retenant a = N / R et b = N' / R', on obtient, pour les milieux des bandes normalisées en GSM et DCS, les équations

### eq-I,

W = A / 2 + 942,5 Y = 1842,5 - A / 2
X = aB + 897,5 Z = 1747,5 - bC

Suivant la catégorie d'oscillateur décrit plus haut, la solution selon l'invention la plus intéressante conduit, pour un émetteur récepteur bibande, à un oscillateur unique, de première catégorie (la moins chère), pour l'oscillateur 5. Et, il faut un oscillateur ajusté, de deuxième catégorie, pour l'oscillateur 4. En effet celui-ci doit couvrir, selon les équations eq-I,
en GSM W ± 17,5 MHz en réception X ± 17,5 MHz en émission
en DCS Y ± 37,5 MHz en réception Z ± 37,5 MHz en émission

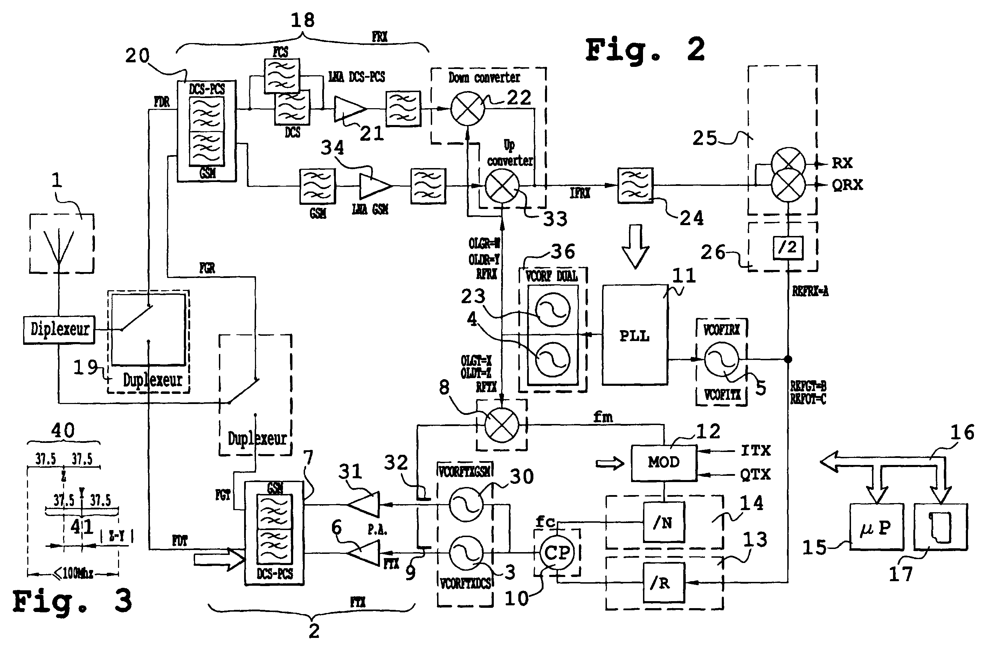

La contrainte d'une plage de réglage inférieure à 100 MHz pour l'oscillateur 4 est réalisée en choisissant pour milieu de la plage de réglage en émission, Z, une fréquence suffisamment peu différente du milieu de la plage de réglage en réception Y. Cette différence doit alors être telle que la somme de celle différence augmentée de 37,5 MHz vers les valeurs basses et de 37,5 MHz vers les valeurs hautes soit inférieure à 100 MHz. La figure 3 montre, dans le cas où Y est plus grand que Z comment s'exprime celle contrainte. Dans ce cas, la plage 40, en émission, centrée sur Z est décalée de |Y - Z| de la plage 41 en réception centrée sur Y. Le total des deux plages, en recouvrement ne doit pas dépasser la limite choisie (100 MHz dans le cas montré). Ceci s'écrit
|Z - Y| < 100 -2 x 37,5 = 25 MHz

De même en GSM on obtiendra
|W - X| < 100 - 2 x 17,5 = 65 MHz

Si on veut une combinaison entre GSM et DCS, on sera conduit à
|Z - X| < 100 - 17,5 - 37,5 = 45 MHz et de même
|Z - W| < 45 MHz
|Y - X| < 45 MHz
|Y - W| < 45 MHz

La contrainte sur l'oscillateur à fréquence intermédiaire conduit avec un même raisonnement à
|A - B| < 30 MHz
|B - C| < 30 MHz
|C - A| < 30 MHz

On obtient ainsi 9 double inéquations, eq-II, qu'on peut résoudre on A, B, C, en tenant compte des équations eq-I. Les inéquation eq-II sont par ailleurs simplifiées sous une forme eq-III :

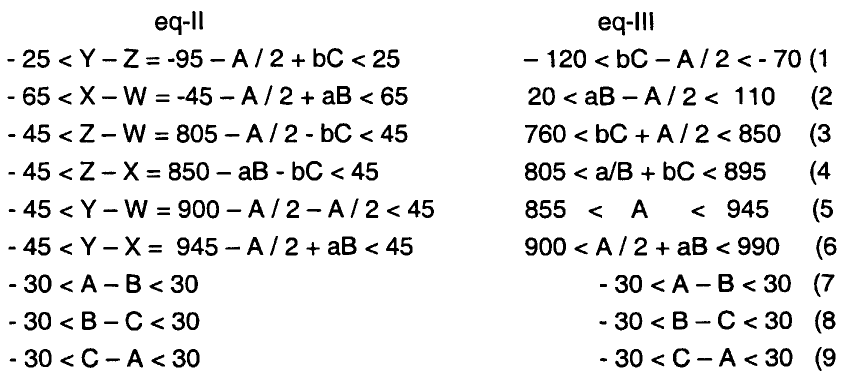

La première ligne (1 exprime par exemple que Y - Z, qui doit être compris entre -25 et +25, résulte de l'écart théorique 95 entre les milieux des bandes en émission et en réception, compensé par les mélanges avec A / 2 et bC.

Si on additionne les deux inéquations (1 et (3 :
-120 < bC - A / 2 < -70
760 < A / 2 + bC < 850, on obtient
640 < 2bC < 780 soit
320 < bC < 390 à combiner avec l'addition de (1 avec l'inverse de (3, soit
70 + bC < A / 2 < 120 + bC

Si on additionne les deux inéquations (2 et (6 :
20 < aB - A / 2 < 110
900 < A / 2 + aB < 990, on obtient
920 < 2aB < 1100 soit
460 < aB < 550 à combiner avec l'addition de (2 avec l'inverse de (6, soit
900 - A / 2 < aB < 990 - A / 2;

Par ailleurs, l'inéquation 4 conduit à
805 - bC < aB < 895 - bC.

Les inéquations à traiter deviennent alors
320 < bC < 390 (1
70 + bC < A / 2 < 120 + bC (2
460 < aB < 550 (3
900 - A / 2 < aB < 990 - A / 2 (4
805 - bC < aB < 895 - bC (5
855 < A < 945 (6
-30 < C - A < 30 (7
-30 < B - A < 30 (8
-30 < C - B < 30 (9

Si 855 < A < 945 et |B - A| et |C - A| < 30, alors A et B doivent être compris entre 825 et 975 MHz. Ceci limite les valeurs de a et b. En prenant N, N', R et R' inférieurs à 8, la condition (1 conduit à 920/975 < b < 390/825, soit b = 1/3, 3/8, 2/5, 3/7. En faisant de même avec la condition 3, on limite a à 460/975 < a < 550/825, soit a = 1/2, 4/7, 3/5, 5/8, 2/3. Le tableau, TABLEAU 2, suivant donne alors pour les valeurs de a et b trouvées les solutions des différentes inéquations.

On en déduit plusieurs groupement de valeurs donnant des solutions simples et peu coûteuses pour réaliser un téléphone bibande.

Pour un fonctionnement en triple bande, la solution la plus simple selon l'invention comporte un oscillateur simple de première catégorie pour l'oscillateur 5 et un de troisième catégorie pour l'oscillateur à fréquence de transition. En effet, compte tenu de la configuration de réception, des largeurs de bande DCS et PCS, et de leur écart, la bande totale DCS PCS en réception est contenue dans 1990 - 1805 = 185 MHz. Soit une bande supérieure à celle d'un oscillateur de deuxième catégorie.

Aussi la solution selon l'invention est-elle de contenir la variation de fréquence dans une bande de 220 MHz pour les trois bandes, tant en réception qu'en émission. Dans ce cas on contiendra la variation de fréquence de l'oscillateur à fréquence de transition, sur tous les canaux PCS à un maximum de 100 MHz.

On réécrit alors les inéquations comme précédemment eq-II et eq-III en prenant U et V comme milieux de bande de réception et d'émission de l'oscillateur 4 quand il est dans la gamme PCS. On obtient U = 196 - A / 2 et V = 1880 - cD. Avec D la valeur de fréquence de l'oscillateur à fréquence intermédiaire en émission, et c le rapport N''/R'' des coefficients diviseurs retenus pour cette gamme PCS.

La contrainte d'une bande inférieure à 100 MHz conduit à
|U - V| < 100 - 2 x 30 = 40

La contrainte d'une bande de 220 MHz, par rapport à la bande GSM conduit à
|U - W| < 220 - 17,5 - 30 = 172,5. Et de même
|U - X| < 172,5
|V - X| < 172,5
|V - W| < 172,5

La contrainte d'une bande de 220 MHz par rapport à une bande DCS conduit à
|U - Z| < 220 - 37,5 30 = 152,5. Et de même
|U - Y| < 152,5
|V - Z| < 152,5
|V - Y| < 152,5

La contrainte d'une bande de l'oscillateur à fréquence intermédiaire toujours inférieure ou égale à 30 MHz conduit à |D - A| < 30, |D - B| < 30, et à |D - C| < 30.

Les contraintes sur U - Y et U - W portant sur les différences en réception, peuvent être oubliées. En effet
U - Y = (1960 - A / 2) - (1842,5 - A / 2) = 117,5 MHz soit U = Y + 117,5 donc nécessairement inférieur à 152,5 MHz. De même
U - W = (1960 - A / 2) - ( A / 2 + 942,5) = 1017,5 - A. Or |U - W| < 17 implique que - 172,5 < 1017,5 - A < 172,5. Soit 845 < A < 1190. Comme la contrainte sur A est déjà 855 < A < 945, cette nouvelle contrainte n'apporte rien de plus.

De même pour |U - X| < 172,5 qui implique que
-172,5 < 1062,5 - A / 2 - aB < 172,5 équivalent à
890 < A / 2 + aB < 1235 n'amène rien de plus que l'inéquation eq-III-6 soit 900 < A / 2 + aB < 990.

De même enfin que |U - Z| < 152,5 implique que
- 152,5 < 212,5 - A / 2 + bC < 152,5 équivalent à
365 < bC - A / 2 < - 60 n'amène rien de plus que l'inéquation eq-III-1 soit - 120 < bC - A / 2 < - 70.

Les inéquation eq-III peuvent s'écrire
|U - V| < 40 soit - 40 < 80 - A / 2 + cD < 40
|V - X| < 172,5 soit -172,5 < 982,5 - cD - aB < 172,5
|V - W| < 172,5 soit-172,5 < 937,5 - cD - A / 2 < 172,5
|V - Z| < 12,5 soit-152,5 < 132,5 - cD + bC < 152,5
|V - Y| < 152,5 soit - 152,5 < 37,5 - cD + A / 2 < 152,5

Ces cinq inéquations sont respectivement équivalentes à
-120 < cD - A / 2 < - 40
810 < cD + aB < 1155
765 < cD + A / 2 < 1110
20 < dD - bC < 285
- 115 < cD - A / 2 < 190

Elles se combinent avec -30 < |D - A| < 30, -30 < |D - B| < 30, et -30 <|D - C| < 30. Ces inéquations conduisent à

### eq-IV

-115 < cD - A / 2 < -40 (1
810 < cD + aB < 1155 (2
765 < cD + A / 2 < 1110 (3
-20 < cD - bC < 285 (4
-30 < D - A < 30 (5
-30 < D - B < 30 (6
-30 < D - C < 30 (7

De la comparaison des inéquations eq-III et eq-IV, on peut remarquer que si bC + 5 < cD < bC + 30, les équations IV-1 à IV-4 sont vérifiées.

Des inéquation eq-IV-1 et eq-IV-3 on peut tirer
325 < cD < 650 et
-115 + A / 2 < cD < - 40 + A / 2

On en déduit le tableau TABLEAU 2

Les conditions nécessaires s'écrivent

### eq-V

325 < cD < 650 (1
-115 + A / 2 ₘᵢₙ < cD < - 40 + A / 2 ₘₐₓ (2
810 - aB ₘᵢₙ < cD < 1155 - aB ₘₐₓ (3
bC ₘᵢₙ - 20< CD < 285 + bC ₘₐₓ (4
-30 < D -A <30 (5
-30 < D - B < 30 (6
-30 < D - C < 30 (7

En remplaçant dans les inéquations eq-V-1 à eq-V-4 les valeur min et max de A / 2, bC , aB, on obtient
-325 < cD < 650
422,5 < A / 2 < 472,5 et eq-V-2 donne 307,5 < cD < 432,5
460 < aB < 550 et eq-V-3 donne 260 < cD < 695
320 < bC < 350 et eq-V-4 donne 300 < cD < 675

Au total il reste 325 < cD < 432,5 et 825 < D < 675. Ce qui conduit pour c aux conditions 225/975 < c < 432,5/825, soit 1/3 < c < 0,44. Si N'' et R'' sont limités par 8, on peut prendre les mêmes valeurs que b, à savoir 1/3, 3/8, 2/5, 3/7.

On va expliquer maintenant à l'aider du TABLEAU 1 le fonctionnement du téléphone de téléphonie mobile de l'invention. Ce TABLEAU 1 comporte plusieurs colonnes. Il comporte aussi des groupements d'indications, séparés par des interlignes vides. Certains groupements représentent une solution de réalisation du schéma des figures 1 ou 2. Dans chaque groupement on trouvera ainsi soit GSM et DCS, soit GSM, DCS et PCS. Dans une première colonne on a indiqué, en raccourci, les types de bande de fréquence concernés. Dans une deuxième colonne on a montré les fréquences des signaux délivrés pour la réception par l'oscillateur 4. Dans une troisième colonne on a montré les fréquences des signaux délivrés pour l'émission par l'oscillateur 4. Dans une quatrième colonne, on a indiqué l'écart △ de réglage entre la valeur de départ de la dynamique de fréquence en émission et la valeur de départ de la dynamique de fréquence en réception selon un mode donné.

Dans une cinquième cotonne on a indiqué, pour un usage bibande, l'exploration maximale de l'oscillateur 4 unique. Selon sa valeur, inférieure à 40 MHz, à 100 MHz, ou à 220 MHz, on en déduit le type d'oscillateur à retenir. Dans une sixième colonne, on a montré les mêmes éléments pour un montage tribande. Dans une septième colonne, des commentaires précisent les catégories des oscillateurs ainsi retenus.

Dans une huitième colonne, on a indiqué la fréquence en réception du troisième oscillateur 5 à fréquence intermédiaire quand il sert en réception. Dans une neuvième colonne et une dixième colonne on a indiqué les valeurs des coefficients de division N et R retenus. Dans une onzième colonne on a indiqué les fréquences de l'oscillateur 5 à fréquence intermédiaire quand il sert en émission.

Dans une douzième colonne, on a indiqué le saut en fréquence de l'oscillateur à fréquence intermédiaire quand il sert en émission ou en réception. On constate que ce saut de fréquence impose la catégorie de l'oscillateur à retenir.

Dans une treizième colonne, on a indiqué par moins ou par plus l'utilisation d'un mélangeur infradyne 22 ou supradyne 33. Dans la quatorzième colonne on a indiqué la valeur du premier filtre à fréquence intermédiaire 24. La quinzième colonne renseigne sur la fréquence de comparaison fc mise en oeuvre dans le comparateur 10. En bas du TABLEAU 1 on a rappelé les gammes normalisées des bandes GSM, DCS et PCS, en émission, en réception, ainsi que l'écart normal entre les plages d'émission et de réception.

Pour le premier groupement représenté, il s'agit des normes GSM et DCS seulement. Un des deux oscillateurs (par exemple l'oscillateur 4) servira pour la gamme GSM (mais en émission et en réception), alors qu'un autre (un oscillateur 23 en parallèle de l'oscillateur 4) servira pour la gamme DCS (en émission et en réception lui aussi). On se rend compte que l'écart pour les oscillateurs 23 et 4 entre les plages d'émission et de réception est seulement de 9 MHz ou de 4 MHz. En effet la dynamique de réception passe de 1195 à 1230 alors qu'en émission elle passe de 1204 à 1239. En pratique la dynamique totale de l'oscillateur concerné sera de 44 (35 plus 9) alors qu'elle était de 80 dans l'état de la technique. En conséquence le réglage pourra être plus précis. Pour ce premier groupement, l'oscillateur 5 délivre un signal à 540 MHz. Dans ce cas on a retenu, pour la bande GSM, pour N la valeur 3 et pour R la valeur 5. Ceci amène en émission, le comparateur 10 à recevoir en provenance de l'oscillateur 5 un signal à une fréquence de 540MHz / 5 égale à 108 MHz.

En émission, l'oscillateur 30 utilisé aura, en début de gamme, une fréquence de 880 MHz. Le mélangeur 8 reçoit alors un signal à 880 MHz sur sa première entrée. Le signal délivré par l'oscillateur 4 est alors de 1204 MHz. La différence 1204 MHz moins 880 MHz conduit à un signal à 324 MHz. En divisant la fréquence de ce signal par le coefficient N égal à 3 on obtient également 108 MHz.

En réception, le mélangeur 33 recevra un signal à 1195 MHz en provenance de l'oscillateur 4. Il recevra par ailleurs un signal à 925 MHz de l'antenne 1. La différence de 270 MHz délivrée par le mélangeur 33 sera filtrée dans le filtre 24 qui a justement une valeur de 270MHz.

On peut refaire des mêmes calculs, pour ce groupement, avec les valeurs indiquées pour la gamme DCS. En émission, 1710 MHz moins 1531 MHz égale 179 MHz. Divisé par deux pour le coefficient N du diviseur 14, on obtient une fréquence de comparaison de 89,5 MHz. Cette fréquence de comparaison est la même que celle qu'on obtient en divisant par 6 la fréquence de l'oscillateur 5 à fréquence intermédiaire à 537 MHz.

Ces considérations appellent plusieurs remarques. Premièrement un peu différemment de ce qui a été évoqué, un couple 36 d'oscillateurs de transition, mais chacun à dynamique plus faible, va servir en tant qu'oscillateur 4 (ou en tant qu'oscillateur 23) pour fournir le signal à fréquence de transition en émission et en réception. Dans ce cas, ce couple 36 de ces oscillateurs recevra également un signal de commande en provenance du microprocesseur 15 pour effectuer les mises en service adéquates. Dans cette solution, l'oscillateur 4 devra avoir une dynamique de 39 MHz. Par comparaison, pour la gamme DCS, un seul oscillateur 23 sera utilisé mais aura une dynamique de 79 MHz, au lieu d'avoir une dynamique de 170 MHz comme dans l'état de la technique. D'autre part, l'oscillateur 5 ne possédera pas une même valeur de fréquence intermédiaire selon qu'il agira en émission et en réception. Cependant dans le cas DCS, on constate que l'écart entre 540 MHz et 537 MHz étant très faible, d'une part on est sûr de se situer avec le circuit 11 dans la plage de réglage de cet oscillateur 5 et d'autre part le ralliement de la nouvelle valeur sera très rapide. Au moment de la commutation, au passage d'émission à réception ou réciproquement, le circuit 11 va donc faire changer la valeur de l'oscillateur 5 et commuter les fonctionnalités des oscillateurs 4 et 23. Plus exactement la sortie d'un oscillateur sera appliquée au mélangeur 8 ou au mélangeur 33. Dans ce cas l'autre est neutralisé. Dans une autre gamme, c'est l'autre oscillateur qui sera utilisé.

On constate dans ce cas qu'on utilise cinq oscillateurs, les oscillateurs 3, 4, 5, 23 et 30. On n'en utilise donc pas six comme on pouvait s'y attendre compte tenu de l'écart important situé entre la gamme GSM et la gamme DCS. Dans les autres groupements, il n'y aura que quatre oscillateurs, les oscillateurs 3, 4, 5, et 30

Par ailleurs, on notera une particularité de la fréquence de comparaison qui dans un cas comme dans l'autre, à 108 MHz ou à 89,5 MHz, ne sera jamais un sous-multiple entier d'une fréquence utilisable dans la voie d'émission 2. En effet 8 fois 108 MHz égale 864 MHz (inférieur à 880 MHz) alors que 9 fois 108 MHz égale 972 MHz (supérieur à 960 MHz). De la même façon, 20 fois 89,5 MHz égale 1790 MHz, supérieur à 1785 MHz alors que 19 fois 89,5 MHz égale 1700,5 MHz qui est inférieur à 1710 MHz. Ceci étant, on aurait pu trouver d'autres nombres dans cette solution pour N et R que 3 et 5 dans un cas, et 2 et 6 dans l'autre, mais le fonctionnement aurait été moins bon quoique envisageable. En définitive ce qui compte de ce point de vue est qu'aucun harmonique à la fréquence du signal de comparaison fc ne tombe dans la bande d'émission.

Pour le deuxième groupement, la solution est remarquable en ce sens que l'oscillateur 4 ne commute pas, entre émission et réception, ni en GSM, ni en DCS. L'intérêt est celui rappelé ci-dessus d'une commutation plus rapide d'une trame de réception à une autre. Dans ce deuxième groupement en outre, si on se cherche à réaliser un émetteur récepteur bibande, un seul oscillateur de catégorie deux sera suffisant. Si on cherche à réaliser un émetteur récepteur tribande, soit on pourra l'obtenir avec deux oscillateurs de catégorie deux (un avec une dynamique de 85 MHz, et l'autre avec une dynamique de 67 MHz), soit on pourra l'obtenir avec un seul oscillateur de catégorie trois (avec 202 MHz de dynamique)

Par opposition, le troisième groupement montre un exemple de réalisation, non conforme à l'invention, qui était pratiqué dans l'état de la technique, Dans ce groupement, alors que pour la gamme GSM il est déjà nécessaire de disposer d'un oscillateur de deuxième catégorie, pour la gamme DCS il faut en plus un oscillateur de troisième catégorie. En outre, il faudrait encore un oscillateur de troisième catégorie supplémentaire pour la gamme PCS, avec aucun espoir qu'un oscillateur servant dans une gamme puisse servir dans une autre.

Les quatre derniers groupements qui sont montrés sur le TABLEAU 1 présentent la particularité que, s'ils sont tribandes, ils nécessitent un oscillateur de troisième catégorie. Ils nécessitent un oscillateur de deuxième catégorie s'ils sont bibandes. Ou bien pour trois bandes, deux oscillateurs de deuxième catégorie peuvent être utilisés. Par exemple pour le quatrième groupement, la dynamique de l'oscillateur 4, utilisé en émission ou en réception bibande selon le besoin, sera de 1365 MHz à 1445 MHz. Elle est à peine supérieure, avec 80 MHz au total, à la dynamique de 75 MHz d'une seule des bandes d'émission ou de réception dans la gamme DCS. Donc avec les choix résultant du TABLEAU 1, non seulement on réduit la dynamique par rapport à ce qu'elle serait nécessaire pour une seule gamme (la gamme DCS) mais en plus on se sert ici du même oscillateur 4 pour les deux gammes GSM et DCS, ou même les trois gammes. Dans le cas de ces quatre derniers groupements comme dans le cas des deux premiers groupements, on n'utilise ni le quatrième mélangeur 27, ni le filtre 28, ni le diviseur 29. Ceci serait possible néanmoins avec d'autres valeurs de fréquence.

Avec les deux oscillateurs 3 et 30 à la fréquence d'émission qui sont nécessaires (parce que les bandes de fréquence, GSM d'une part et DCS d'autre part, sont vraiment trop distantes) et avec l'oscillateur 5 à fréquence intermédiaire ceci conduit un nombre d'oscillateurs limité à quatre. On peut dans ces conditions assez facilement gérer la bande PCS.

Le quatrième groupement est ressemblant au cinquième groupement. Dans ce dernier toutefois les écarts de dynamique sont encore plus faibles : il est encore plus facile de commander les oscillateurs à fréquence de transition. Par contre, entre l'émission et la réception l'écart de fréquences de l'oscillateur à fréquence intermédiaire doit être plus accentué, passant de 880 à 847 MHz. Dans les deux cas, les fréquences de comparaison, autour de 170 MHz et autour de 121 MHz sont extérieures par leurs harmoniques aux bandes concernées en émission.

Avec l'invention d'une part on peut réduire le nombre de filtres en transmission et d'autre part on élimine efficacement les parasites de la synthèse d'émission lors du dernier mélange dans le mélangeur 8. On notera en outre qu'un même oscillateur sert dans un mode donné (GSM, ou DCS, ou PCS) en émission et en réception. En conséquence l'invention pourrait permettre de se passer d'une commutation entre émission et réception dans le mode GSM ou le mode DCS. La commutation évitée est celle de l'oscillateur 4.

Avec l'invention, on atteint bien les résultats suivants. Le nombre de composants, notamment d'oscillateurs, est réduit. Les commandes de commutation sont réduites : les commandes de changement de norme sont organisées comme celle relative à l'agilité en fréquence. Il y a une dynamique réduite de la variation en fréquence des oscillateurs. Aucun harmonique du signal à la fréquence de comparaison ne se situe dans la bande émise. Les filtres utilisés sont standardisés, notamment un filtre à 440 MHz.

Toutes les solutions envisageables ne sont pas montrées sur le tableau TABLEAU 1. Celui-ci ne montre que certaines sloutions préférées. D'autres solutions déduites du tableau TABLEAU 2 et du procédé de détermination de l'invention sont aussi envisageables.

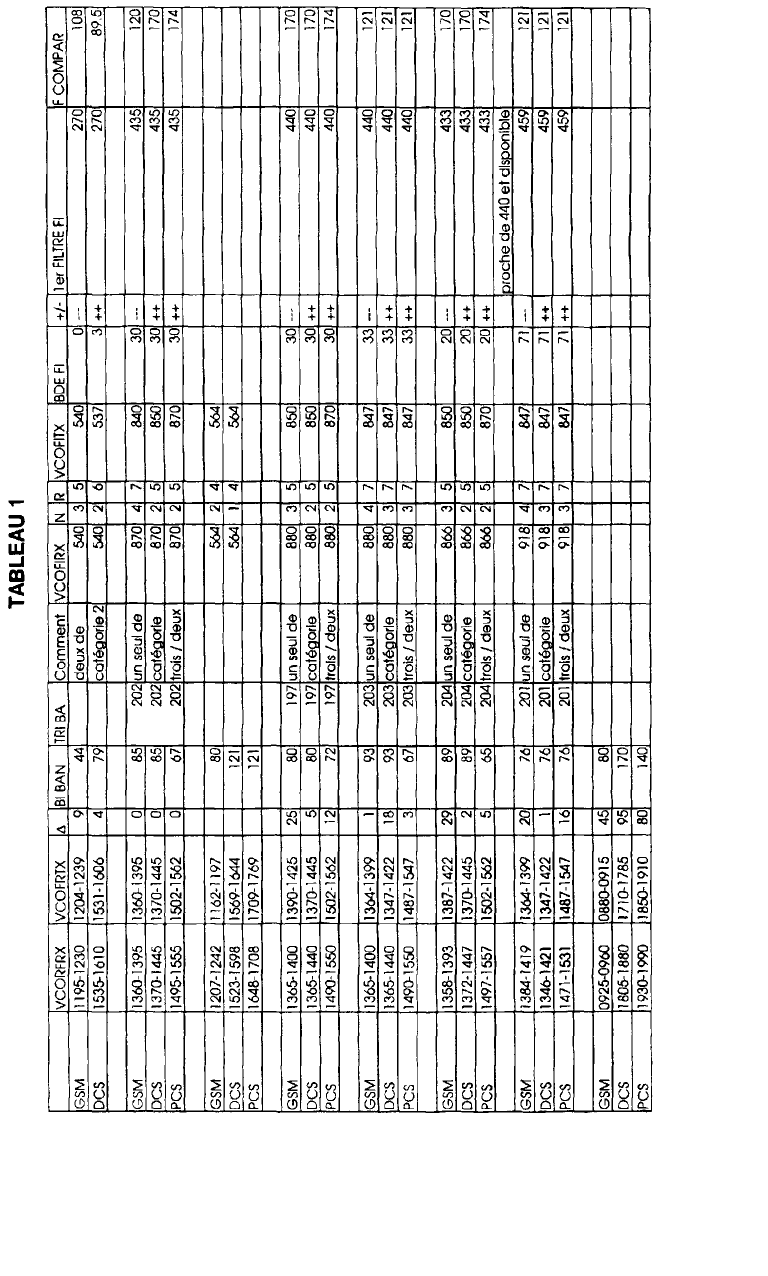

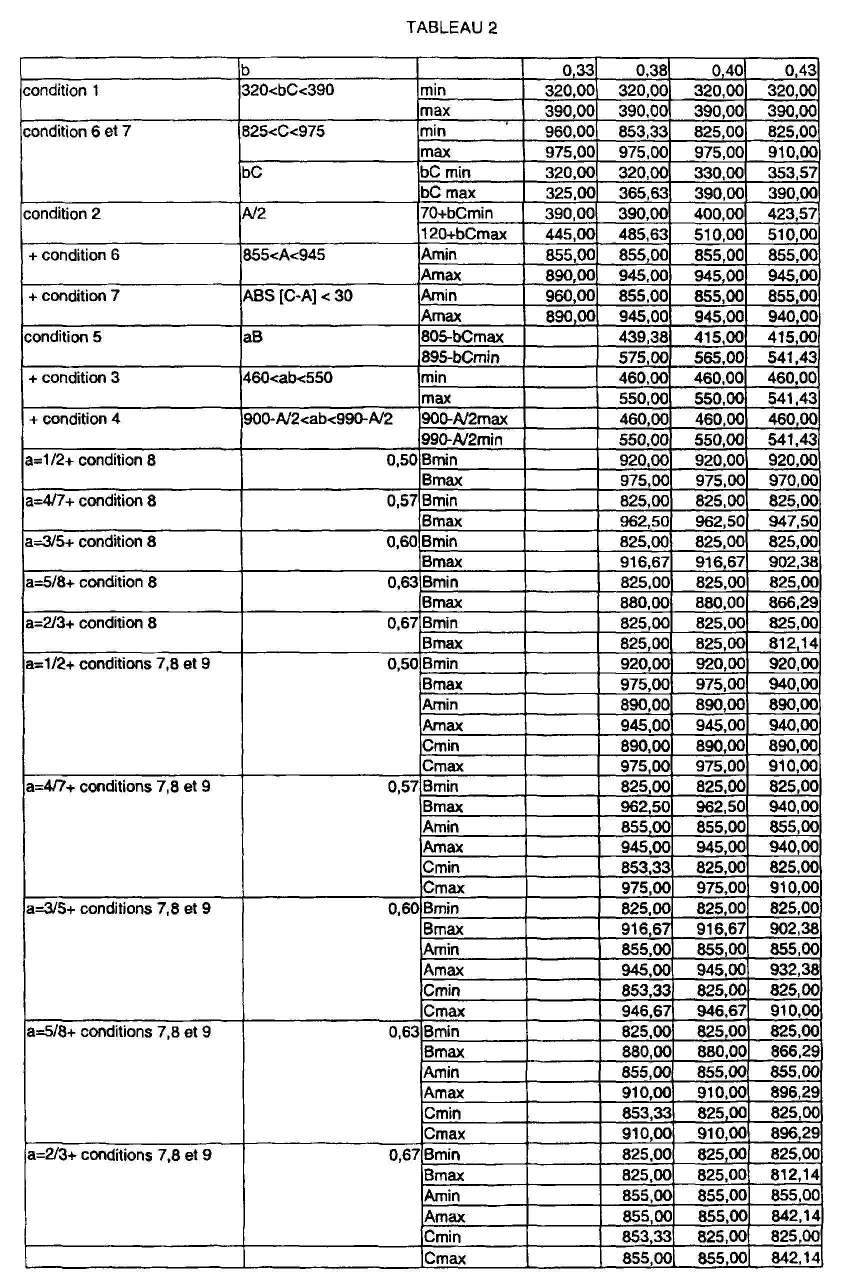

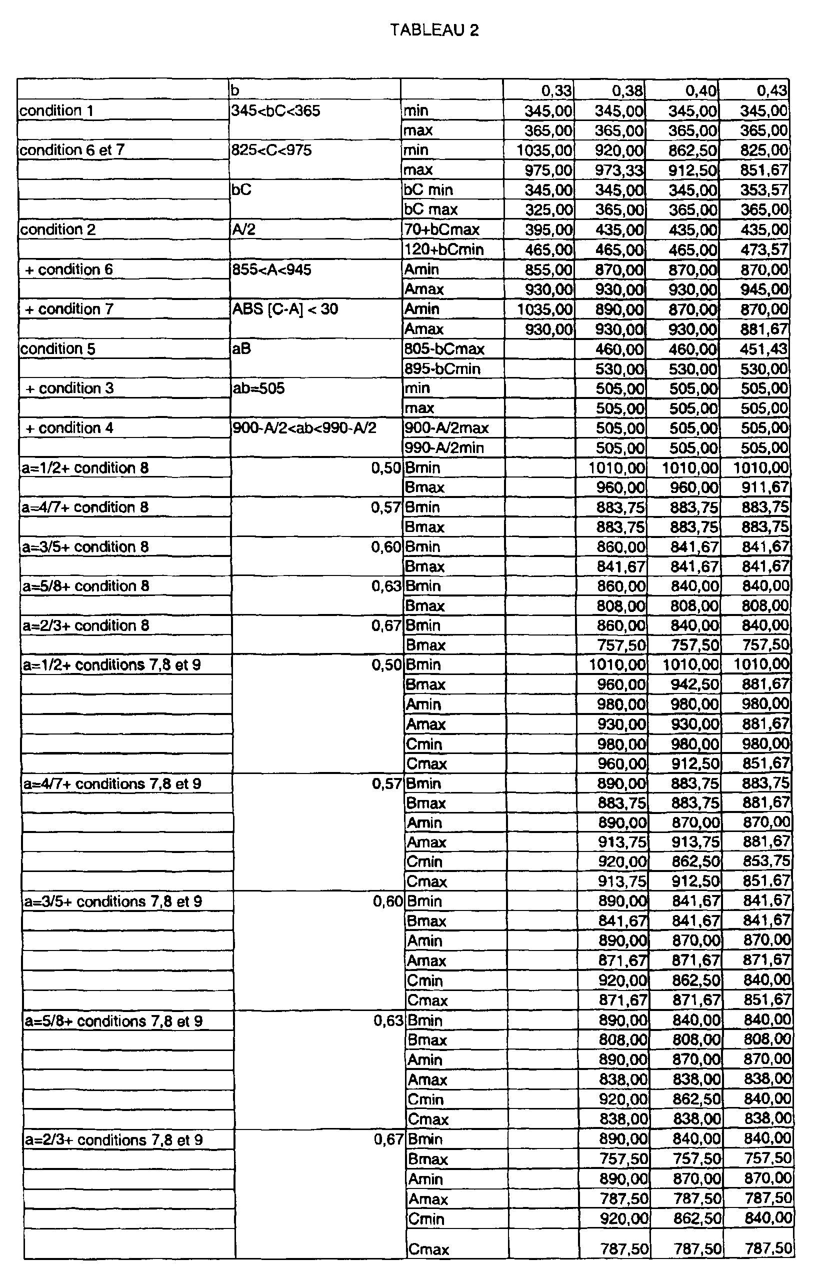

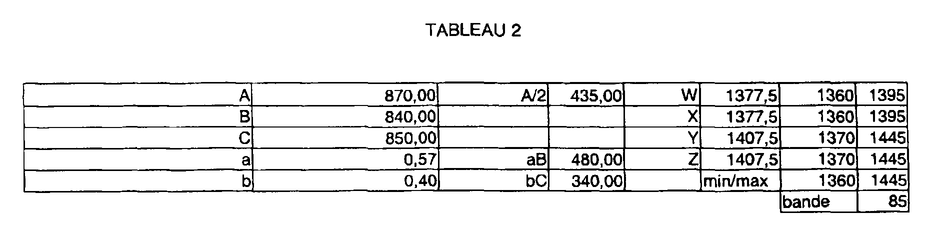

## Revendications

1. Procédé de réglage d'un émetteur récepteur multibande de téléphonie mobile comportant une antenne (1) de rayonnement, une voie (2) d'émission et une voie (18) de réception reliées à cet aérien, un premier (3), un deuxième (4) et un troisième (5) oscillateurs commandés en tension et délivrant respectivement un signal à une fréquence d'émission (FTX), un signal à une fréquence de transition (RFTX, RFRX), et un signal à une fréquence intermédiaire (FITX), le signal à la fréquence d'émission étant transmis par le premier oscillateur à l'antenne, un premier mélangeur (8) connecté en entrée aux sorties des premier et deuxième oscillateurs, et recevant de ce premier oscillateur le signal à la fréquence d'émission et de ce deuxième oscillateur le signal à la fréquence de transition, un comparateur (10) connecté en entrée à la sortie du premier mélangeur et à la sortie du troisième oscillateur, et délivrant en sortie un signal de commande du premier oscillateur, et entre le premier mélangeur et le comparateur et entre le troisième oscillateur et le comparateur respectivement un premier (14) et un deuxième (13) diviseur de fréquence,
caractérisé en ce qu'il comporte les étapes suivantes
- on établit un système d'inéquations qui prend en compte une dynamique limitée en fréquence d'un unique oscillateur à fréquence de transition pour que cet oscillateur couvre toutes les bandes désirées en émission et en réception,
- ce système d'inéquations possédant comme inconnues des plages de fréquence de cet oscillateur à fréquence de transition et de cet oscillateur à fréquence intermédiaire,
- on résout le système dinéquations en choisissant des valeurs de division des diviseurs de fréquence inférieures à un nombre prédéterminé,
- on règle l'émetteur récepteur avec des solutions des inéquations et en programmant les diviseurs,
- et on fait fonctionner le premier mélangeur en infradyne pour une bande de fréquence et en supradyne pour une autre.

2. Procédé selon la revendication 1, caractérisé en ce que
- on choisit une dynamique limitée à un premier seuil pour un oscillateur et à un deuxième seuil pour un autre oscillateur.

3. Procédé selon la revendication 2, caractérisé en ce que
- le premier seuil vaut 100 MHz et le deuxième seuil vaut 200 MHz, les deux à 5% près.

4. Procédé selon l'une des revendications 1 à 3, caractérisé en ce que le nombre prédéterminé vaut 8.

5. Téléphone mobile comportant un émetteur récepteur réglé selon l'une des revendications 1 à 4, caractérisé en ce qu'on règle l'oscillateur à fréquence de transition avec des valeurs, en MHz, comprises, en réception et en émission respectivement, entre
en GSM, entre 1195 et 1230 et entre 1204 et 1239
en DCS, entre 1535 et 1610 et entre 1531 et 1606

6. Téléphone mobile comportant un émetteur récepteur réglé selon l'une des revendications 1 à 4, caractérisé en ce qu'on règle l'oscillateur à fréquence de transition avec des valeurs, en MHz, comprises, en réception et en émission respectivement, entre
en GSM, entre 1360 et 1395 et entre 1360 et 1395
en DCS, entre 1370 et 1445 et entre 1370 et 1445

7. Téléphone mobile comportant un émetteur récepteur réglé selon l'une des revendications 1 à 4, caractérisé en ce qu'on règle l'oscillateur à fréquence de transition avec des valeurs, en MHz, comprises, en réception et en émission respectivement, entre
en GSM, entre 1360 et 1395 et entre 1360 et 1395
en DCS, entre 1370 et 1445 et entre 1370 et 1445
en PCS, entre 1495 et 1555 et entre 1502 et 1562

8. Téléphone mobile comportant un émetteur récepteur réglé selon l'une des revendications 1 à 4, caractérisé en ce qu'on règle l'oscillateur à fréquence de transition avec des valeurs, en MHz, comprises, en réception et en émission respectivement, entre
en GSM, entre 1365 et 1400 et entre 1390 et 1425
en DCS, entre 1365 et 1440 et entre 1370 et 1445
en PCS, entre 1490 et 1550 et entre 1502 et 1562

9. Téléphone mobile comportant un émetteur récepteur réglé selon l'une des revendications 1 à 4, caractérisé en ce qu'on règle l'oscillateur à fréquence de transition avec des valeurs, en MHz, comprises, en réception et en émission respectivement, entre
en GSM, entre 1365 et 1400 et entre 1364 et 1399
en DCS, entre 1365 et 1440 et entre 1347 et 1422
en PCS, entre 1490 et 1550 et entre 1487 et 1547

10. Téléphone mobile comportant un émetteur récepteur réglé selon l'une des revendications 1 à 4, caractérisé en ce qu'on règle l'oscillateur à fréquence de transition avec des valeurs, en MHz, comprises, en réception et en émission respectivement, entre
en GSM, entre 1358 et 1393 et entre 1387 et 1422
en DCS, entre 1372 et 1447 et entre 1370 et 1445
en PCS, entre 1497 et 1557 et entre 1502 et 1562

11. Téléphone mobile comportant un émetteur récepteur réglé selon l'une des revendications 1 à 4, caractérisé en ce qu'on règle l'oscillateur à fréquence de transition avec des valeurs, en MHz, comprises, en réception et en émission respectivement, entre
en GSM, entre 1384 et 1419 et entre 1364 et 1399
en DCS, entre 1346 et 1421 et entre 1347 et 1422
en PCS, entre 1471 et 1531 et entre 1487 et 1547.

12. Téléphone selon l'une des revendications 5 à 11, caractérisé en ce qu'il comporte un cinquième mélangeur (33) monté en parallèle avec le deuxième mélangeur (22) dans la voie de réception.

13. Téléphone selon l'une des revendications 5 à 12, caractérisé en ce que le deuxième et le troisième oscillateur sont commandés en tension par un circuit (11) de référence programmable.

14. Téléphone selon l'une des revendications 5 à 13, caractérisé en ce que le troisième diviseur (26) est un diviseur par deux.

15. Téléphone selon l'une des revendications 5 à 14, caractérisé en ce que le premier oscillateur (3) est connecté en parallèle avec un quatrième oscillateur (30) accordé sur une autre bande de fréquence que celle de ce premier oscillateur.

16. Téléphone selon l'une des revendications 5 à 15, caractérisé en ce que le deuxième diviseur comporte plusieurs sous-diviseurs en cascade, notamment un premier sous-diviseur pour diviser par 1, 2 ou 3 et un deuxième sous-diviseur.
